# EUROPÄISCHE PATENTANMELDUNG

(11) **EP 3 172 998 A1**
(43) Veröffentlichungstag der Anmeldung: **31.05.2017**
(21) Anmeldenummer: 15196807.0
(22) Anmeldetag: 27.11.2015
(51) Int. Cl.: A47J 37/07

(54) **FEUERTROMMEL**

(71) Anmelder: Rüegg Cheminee Schweiz AG, 8340 Hinwil (CH)
(72) Erfinder: Rutschmann, Christoph, 8570 Weinfelden (CH); Rüegg, Matthias, 8126 Zumikon (CH); Hunziker, Raphael, 5722 Gränichen (CH)
(74) Vertreter: Troesch Scheidegger Werner AG

(57) **Zusammenfassung**

Die vorliegende Erfindung betrifft eine Verbrennungsvorrichtung für feste Brennstoffe, die für die Verwendung insbesondere im Aussenbereich vorgesehen ist. Die Verbrennungsvorrichtung umfasst einen Feuerraum in einem freistehenden Zylinder. Der Zylinder wiederum umfasst eine Abdeckplatte, eine mindestens zweiteilige Zylindermantelwand aus Glas und/oder Keramik und/oder Blech, deren Teile relativ zueinander azimutal verschieblich sind, eine im Zylinder querliegende Grundplatte mit mindestens einer Öffnung, die mittels eines Rostes abgedeckt ist und eine weitere Öffnung zum Abführen von Rauchgasen.

## Beschreibung

Die vorliegende Erfindung betrifft eine Verbrennungsvorrichtung für feste Brennstoffe, insbesondere Holz (Scheitholz, Brennreisig, Hackschnitzel etc.), Holzkohle und Briketts, mit verschliessbarem Verbrennungsraum zur Verwendung überwiegend im Aussenbereich.

Das Zubereiten von Nahrungsmitteln, insbesondere Fleisch, Wurst, aber auch Käse, Gemüse und Stockbrot, über offenem Feuer bzw. Kohle oder Glut erfreut sich besonders, aber nicht nur, im Sommer grosser Beliebtheit. Grillen ist nicht nur eine schmackhafte Methode der Nahrungszubereitung, sondern auch ein geselliges Ereignis. Darüber hinaus geht vom "Feuer" schon seit jeher eine besondere Faszination und Anziehung aus. Jedoch birgt ein offenes Feuer auch gewisse Risiken und unangenehme Nebeneffekte. Einerseits kann das Feuer, im Falle nicht ausreichend getroffener Vorsichtsmassnahmen, wie mangelhaftem Einkesseln der Feuerstelle mit nichtbrennbaren Materialien (beispielsweise Steinen), auf die Umgebung übergreifen oder es können Funken sprühen, die dann Verbrennungen der Haut, Löcher in der Kleidung oder, im schlimmsten Fall, einen Brand ausserhalb der eigentlich vorgesehenen Feuerstelle verursachen. Ganz abgesehen von den Gefahren eines offenen Feuers, gehen jedoch auch gewisse weitere Unannehmlichkeiten mit einem gemütlichen Grillabend einher, wie beispielsweise vom Rauch brennende Augen und nach Rauch riechende Haare und Kleidung.

Vorrichtungen zum Zubereiten von Nahrungsmitteln mithilfe von Feuer für den Gebrauch im Aussenbereich gibt es in den verschiedensten Varianten. Sei es in Form von Feuerschalen mit oder ohne Grillring, Grillgalgen, klassischen Gartengrills, Gartencheminees, oder Pizza-/Brotöfen. Jedoch verhindert keine der Vorrichtungen das Annehmen des Raucharomas durch Haare und Kleidung. Lediglich gas- oder elektrobetriebene Gartenfeuer und Terrassenkamine, sprich Vorrichtungen die keine festen Brennstoffe einsetzen, ermöglichen einen Verbrennungsvorgang ohne dabei Rauch, Russ und Asche zu produzieren. Jedoch bleibt hier zweifelsohne ein Teil des Grillerlebnisses auf der Strecke. Hinzu kommt, dass sich die Nahrungsmittel, je nachdem ob sie auf Kohle gegrillt oder auf einem Gas- oder Elektrogrill zubereitet wurden, geschmacklich unterscheiden.

Die Aufgabe der vorliegenden Erfindung besteht darin, eine alternative Verbrennungsvorrichtung bereitzustellen, die das sichere Verbrennen von festen Brennstoffen im Aussenbereich ermöglicht.

Diese Aufgabe wird gelöst durch eine Verbrennungsvorrichtung nach dem Wortlaut des Anspruchs 1.

Eine solche Verbrennungsvorrichtung umfasst einen Feuerraum in einem freistehenden Zylinder. Der Zylinder wiederum umfasst eine Abdeckplatte, eine mindestens zweiteilige Zylindermantelwand aus Glas und/oder Keramik und/oder Blech, deren Teile relativ zueinander azimutal verschieblich sind, eine im Zylinder querliegende Grundplatte mit mindestens einer Öffnung, die mittels eines Rostes abgedeckt ist und eine weitere Öffnung zum Abführen von Rauchgasen.

Freistehend meint in diesem Fall insbesondere, dass der Zylinder nicht eingebaut ist sondern frei steht. Seine Aussenwand, sprich die Zylindermantelwand liegt an der Umgebungsluft und ist nicht, auch nicht teilweise, eingemauert oder auf sonstige Weise in beispielsweise einem Teil eines Gebäudes integriert.

Die Öffnung in der Grundplatte dient dazu, den Brennstoff mit Sauerstoff zu versorgen und in Kombination mit dem Rost 30, welcher als Auflage für den Brennstoff dient, eine Trennung von bereits verbrauchtem Brennstoff und noch unverbrauchtem Brennstoff zu ermöglichen. Als feste Brennstoffe in Frage kommen insbesondere Holz (Scheitholz, Brennreisig, Hackschnitzel etc.), Holzkohle und Briketts. Die Gitterabstände des Rostes sollten dabei der Grösse des Brennstoffs angepasst sein. Für Holz beispielsweise darf der Gitterabstand gerne grösser sein, für kleinere Briketts sollte der Gitterabstand etwas kleiner sein. Entscheidend ist, dass der Brennstoff nicht durch den Rost hindurch rutschen kann, bevor er verbrannt ist. Bevorzugt befindet sich die Öffnung in der Mitte der Grundplatte, sodass der Feuerraum symmetrisch betrieben wird und die Wärme zu allen Seiten des Zylinders hin im Wesentlichen gleich verteilt ist.

Die weitere Öffnung zum Abführen von Rauchgasen befindet sich in der oberen Hälfte des Zylinders, beispielsweise in der Zylindermantelwand oder der Abdeckplatte. So können die Rauchgase optimal aus dem Feuerraum entweichen.

Die Abdeckplatte, die Grundplatte und der Rost sind bevorzugt aus Metall, insbesondere einem sehr temperaturbeständigen Metall, wie beispielsweise aus Eisen, gefertigt.

In einer Ausführungsform der Verbrennungsvorrichtung, die, sofern nicht widersprüchlich, kombinierbar mit allen vorerwähnten und noch zu erwähnenden Ausführungsformen ist, ist mindestens einer der Teile der Zylindermantelwand transparent, vorzugsweise aus Glas und/oder Keramik.

Glas meint hier nicht ausschliesslich Glas, welches im Wesentlichen aus Siliciumdioxid besteht, sondern alle metallischen, nichtmetallischen, anorganischen und organischen Gläser. Alternativ zu Glas oder ergänzend können transparente Keramiken eingesetzt werden, wie beispielsweise Aluminiumoxid-Keramik, die beispielsweise bei der Herstellung von Gasentladungslampen verwendet wird.

In einer Ausführungsform der Verbrennungsvorrichtung, die, sofern nicht widersprüchlich, kombinierbar mit allen vorerwähnten und noch zu erwähnenden Ausführungsformen ist, ist unterhalb der Öffnung der Grundplatte ein Auffangbehältnis für Asche angeordnet.

Das Auffangbehältnis ist bevorzugt aus einem temperaturstabilen Material, wie beispielsweise Metall. Um ein unkompliziertes Entleeren der Asche zu ermöglichen, kann das Innere des Auffangbehältnisses beispielsweise über eine Klappe zugänglich oder entnehmbar sein.

In einer Ausführungsform der Verbrennungsvorrichtung, die, sofern nicht widersprüchlich, kombinierbar ist mit allen vorerwähnten und noch zu erwähnenden Ausführungsformen, ist der Zylinder auf einem Sockel abgestützt, vorzugsweise koaxial zur Achse des Zylinders.

Der Sockel kann einerseits eine reine Zierfunktion erfüllen, ermöglicht es aber auch, die Höhe des Feuerraums individuell, beispielsweise nach Kundenwunsch, zu gestalten. Der Sockel kann darüber hinaus bei entsprechender Gestaltung Unebenheiten des zur Aufstellung der Verbrennungsvorrichtung vorgesehenen Grundes ausgleichen, sodass beispielsweise eine horizontale Installation trotz Hanglage möglich ist. Auch kann der Sockel bzw. die Höhe des Sockels vom Anwender vor Ort eingestellt werden, sodass der Feuerraum beispielsweise ausserhalb der Reichweite von Kindern positioniert werden kann.

In einer Ausführungsform, die, sofern nicht widersprüchlich, kombinierbar ist mit allen vorerwähnten und noch zu erwähnenden Ausführungsformen, ist im Sockel ein Auffangbehältnis für Asche vorhanden.

Der Sockel kann sowohl massiv als auch hohl ausgebildet sein. Ist er beispielsweise hohl, so kann er einfach über das Auffangbehältnis gestülpt werden und mit einer Öffnung, den Zugriff auf das Auffangbehältnis ermöglichend, versehen werden. Ist der Sockel massiv ausgebildet, so kann das Auffangbehältnis beispielsweise eine in den Sockel einschiebbare Schublade sein.

In einer Ausführungsform der Verbrennungsvorrichtung, die, sofern nicht widersprüchlich, kombinierbar ist mit allen vorerwähnten und noch zu erwähnenden Ausführungsformen, ist die weitere Öffnung eine Öffnung in der Abdeckplatte, an welcher Öffnung ein Rohr angebracht ist.

Diese Ausführungsform bietet den Vorteil, dass die Rauchgase nicht seitlich, sondern vertikal aus dem Feuerräum heraus geleitet werden und, je nach Länge des Rohres, erst oberhalb der Kopfhöhe des Anwenders an die Umgebung gelangen. Somit wird eine Reizung der Augen durch Rauchgase verhindert und auch der Kontakt von Kleidung etc. mit den Rauchgasen und dementsprechend auch die daraus resultierende Geruchsbelästigung, zusätzlich limitiert bis vollständig vermieden.

In einer Ausführungsform der Verbrennungsvorrichtung, die, sofern nicht widersprüchlich, kombinierbar ist mit allen vorerwähnten und noch zu erwähnenden Ausführungsformen, ist die Grundplatte mindestens teilweise von einer Einlegeplatte aus feuerfestem Material überdeckt, wobei die Einlegeplatte eine Öffnung, welche mindestens teilweise über der Öffnung der Grundplatte liegt, aufweist.

Wird die Grundplatte von einer Einlegeplatte aus feuerfestem Material überdeckt, so ist es ausreichend, die Grundplatte selbst als dünne Metallplatte zu gestalten. Dies spart einerseits Kosten und bietet auch den Vorteil der Wärmeisolierung. Findet der Verbrennungsprozess auf einem feuerfesten, nicht gut wärmeleitenden Material, wie beispielsweise Schamotte, statt, so kann die Wärme den Aussenbereich des Zylinders nicht durch Wärmeleitung erreichen. Der Rost, welcher die Öffnung der Grundplatte abdeckt liegt nun auf der Einlegeplatte.

In einer Ausführungsform der eben erwähnten Ausführungsform der Verbrennungsvorrichtung, die, sofern nicht widersprüchlich, kombinierbar ist mit allen vorerwähnten und noch zu erwähnenden Ausführungsformen, ist die Einlegeplatte mehrteilig.

Da die Einlegeplatte meist sehr schwer ist, erleichtert die mehrstückige Ausführungsform den Transport der Einlegeplatte, aber auch das Einlegen in den Zylinder. Die Dicke einer Einlegeplatte beträgt meist 2-20 cm und der Durchmesser liegt zwischen 80-200 cm.

In einer Ausführungsform der Verbrennungsvorrichtung, die, sofern nicht widersprüchlich, kombinierbar ist mit allen vorerwähnten und noch zu erwähnenden Ausführungsformen, besteht die Einlegeplatte mindestens aus einem der Materialien Keramik, Glas, Glaskeramik, Siliciumoxid, Aluminiumoxid, Magnesiumoxid, Calciumoxid, Zirconiumoxid, Chromoxid, Siliciumcarbid, Kohlenstoff, Molybdän, Wolfram, Edelmetall und/oder bevorzugt aus Schamotte, wie saure Schamotte und Normalschamotte.

Bevorzugt wird für die Einlegeplatte ein Material gewählt, welches nicht nur feuerfest ist, sondern auch einen niedrigen Wärmeleitfähigkeitskoeffizienten hat um zu verhindern, dass die durch den Verbrennungsprozess entstandene Wärme den Feuerraum über Wärmeleitung verlassen kann. Der Wärmeleitfähigkeitskoeffizient ist bevorzugt kleiner als 10 W/(m*K), besonders bevorzugt kleiner als 5 W/(m*K), insbesondere kleiner als 1 W/(m*K).

In einer Ausführungsform der Verbrennungsvorrichtung, die, sofern nicht widersprüchlich, kombinierbar ist mit allen vorerwähnten und noch zu erwähnenden Ausführungsformen, ist innerhalb des Zylinders mindestens ein Innenrost angeordnet.

Ein Innenrost innerhalb des Zylinders ermöglicht das Grillen von Fleisch, Fisch, Gemüse etc. im Feuerraum. Es können auch mehrere Innenroste im Zylinder, bevorzugt auf unterschiedlichen Höhen, angeordnet sein, sodass das Zubereiten verschiedener Speisen bei den jeweils optimalen Temperaturbedingungen zur selben Zeit stattfinden kann.

In einer Ausführungsform der Verbrennungsvorrichtung, die, sofern nicht widersprüchlich, kombinierbar ist mit allen vorerwähnten und noch zu erwähnenden Ausführungsformen, sind innerhalb des Zylinders Auflagen für mindestens einen Innenrost angeordnet.

Die Auflagen können dabei Haken sein, in welche ein Innenrost eingehakt wird, es können aber auch Auflageflächen sein, ausgebildet beispielsweise wie die Sprossen einer Leiter, auf welche ein Innenrost aufgelegt wird, oder aber Führungsschienen wie in einem handelsüblichen Backofen verwendet, in welche der Innenrost eingeschoben werden kann. Es ist auch denkbar, einen oder mehrere Haken an der Unterseite der Abdeckplatte anzubringen und den Innenrost mithilfe von mindestens drei Ketten hängend, wie z.B. an einem Dreibein, daran zu befestigen.

In einer Ausführungsform der Verbrennungsvorrichtung, die, sofern nicht widersprüchlich, kombinierbar ist mit allen vorerwähnten und noch zu erwähnenden Ausführungsformen, ist mindestens eine Gussplatte und/oder mindestens eine Steinplatte auf der Abdeckplatte ausserhalb des Zylinders angeordnet.

Dank der Steinplatte kann die Verbrennungsvorrichtung zum Zubereiten von Speisen auf dem "heissen Stein" verwendet werden. Die Gussplatte ermöglicht das Braten von Fleisch, Fisch etc. ausserhalb des Feuerraums. Die Stein- und Gussplatten sind in ihrer Grundfläche bevorzugt nur maximal halb so gross, wie die freie Fläche der Abdeckplatte, welche zum Auflegen der Platten zur Verfügung steht. Diese Fläche kann beispielsweise verkleinert sein durch die Öffnung zum Abführen von Rauchgasen oder durch das daran angebrachte Rohr. Neben Guss- und/oder Steinplatten können auch Wok-/Paella-Pfannen, Gar-Vorrichtungen, Backhauben etc. auf der Abdeckplatte angeordnet sein. Denkbar ist auch eine Abdeckplatte mit einer Vertiefung in die passgenau ein Topf/eine Pfanne eingesetzt werden kann.

In einer Ausführungsform der Verbrennungsvorrichtung, die, sofern nicht widersprüchlich, kombinierbar ist mit allen vorerwähnten und noch zu erwähnenden Ausführungsformen, sind an der Grundplatte und/oder der Abdeckplatte entlang der Zylinderperipherie durchgehend umlaufend und/oder in Sektorabschnitten Führungsmittel für mindestens einen Teil der Zylindermantelwand angeordnet.

Die Führungsmittel stellen eine bevorzugte Möglichkeit dar, die Teile der Zylindermantelwand relativ zueinander zu verschieben. Die Führungsmittel können dabei schienenbildende Erhöhungen sein, wobei mindestens ein Teil der Zylindermantelwand in einer so gebildeten Schiene beweglich geführt wird. Es können auch Zapfen und/oder Noppen sein, die einen Teil der Zylindermantelwand führen. Sind die Führungsmittel nur in Sektorabschnitten angebracht, so kann auch der Teil der Zylindermantelwand nur in diesem Sektorabschnitt geführt bewegt werden. Sind die Führungsmittel durchgängig vorhanden, so ist ein Bewegen des Teils der Zylindermantelwand über 360° möglich. Der Bewegungswinkel könnte jedoch auch durch Stoppelemente, wie beispielsweise einen Zapfen in der Führungsschiene begrenzt werden. Jeder bewegliche Teil kann eigene, nur für ihn vorgesehene Führungsmittel besitzen, es können jedoch auch mehrere Teile in einer gemeinsamen von Führungsmitteln gebildeten Schiene laufen.

In einer Ausführungsform der Verbrennungsvorrichtung, die, sofern nicht widersprüchlich, kombinierbar ist mit allen vorerwähnten und noch zu erwähnenden Ausführungsformen, besteht die Zylindermantelwand aus vier Teilen, wobei mindestens zwei der Teile im Wesentlichen aus Glas bestehen.

Bestehen die Teile der Zylindermantelwand zumindest teilweise aus Glas oder Teile der Zylindermantelwand ganz aus Glas, so ist der Feuerraum auch in geschlossenem Zustand gut einsehbar. Einerseits ist dies beim Anfeuern oder bei der Zubereitung von Speisen von grossem Vorteil, andererseits bietet die Verbrennungsvorrichtung so einen zusätzlichen "optischen" Genuss.

In einer Ausführungsform der Verbrennungsvorrichtung, die, sofern nicht widersprüchlich, kombinierbar ist mit allen vorerwähnten und noch zu erwähnenden Ausführungsformen, besteht die Zylindermantelwand aus vier azimutal gleich ausgerichteten Teilen, wovon zwei Teile unbeweglich und zwei Teile verschieblich sind, bevorzugt, betrachtet von der Zylinderaussenseite, hinter die unbeweglichen Teile.

Azimutal gleich ausgedehnt meint insbesondere, dass die vier Teile der Zylindermantelwand gemeinsam den Umfang des Zylinders abdecken können, jeder Teil deckt einen anderen 90°-Sektor ab. Dabei können zum Beispiel zwei Teile unbeweglich und aus Blech sein und optional zusätzlich dazu dienen, die Abdeckplatte auf der Grundplatte aufstützen. Die zwei anderen Teile sind beweglich und aus Glas und können zum Öffnen des Feuerraums bis zur im Wesentlichen vollständigen Deckung hinter (betrachtet von der Zylinderaussenseite) die Teile aus Blech geschoben werden. Es ist auch denkbar, die Teile der Zylindermantelwand aus Blech doppelwandig zu gestalten, sodass die Teile aus Glas zwischen die beiden Wände der Teile aus Blech geschoben werden können.

In einer Ausführungsform der Verbrennungsvorrichtung, die, sofern nicht widersprüchlich, kombinierbar ist mit allen vorerwähnten und noch zu erwähnenden Ausführungsformen, stützen eine, vorzugsweise mehrere, Streben die Abdeckplatte auf der Grundplatte ab, vorzugsweise innerhalb des Zylinders.

Durch das Anbringen von Streben kann die Konstruktion der Verbrennungsvorrichtung stabilisiert werden. Sind die Streben innerhalb des Zylinders angeordnet, so bietet dies, neben einem optischen, auch einen sicherheitsrelevanten Vorteil. Da die Streben bevorzugt aus Metall, insbesondere einem besonders temperaturstabilen Metall, gefertigt sind, sind sie auch wärmeleitend und können dementsprechend während des Verbrennungsvorgangs sehr heiss werden. Kommt der Anwender mit einer heissen Strebe in Kontakt, so kann dies Verbrennungen zur Folge haben. Befinden sich die Streben innerhalb der Zylindermantelwand, so kann dies nicht passieren. Die Streben können auch dazu dienen, die nicht beweglichen Teile der Zylindermantelwand zu fixieren, respektive zu befestigen.

Eine Ausführungsform der Verbrennungsvorrichtung, die, sofern nicht widersprüchlich, kombinierbar ist mit allen vorerwähnten und noch zu erwähnenden Ausführungsformen, sieht vor, dass, mindestens teilweise, ein radial vorstehender Ring um den Zylinder herum angeordnet ist, welcher beispielsweise für das Auflegen der Füsse, für das Warmhalten von Speisen oder als Abstandhalter verwendet werden kann.

Eine Ausführungsform der Verbrennungsvorrichtung, die, sofern nicht widersprüchlich, kombinierbar ist mit allen vorerwähnten und noch zu erwähnenden Ausführungsformen, sieht vor, dass die Verbrennungsvorrichtung mobil ist. Dies kann beispielsweise durch Räder am Sockel ermöglicht werden.

Eine Ausführungsform der Verbrennungsvorrichtung, die, sofern nicht widersprüchlich, kombinierbar ist mit allen vorerwähnten und noch zu erwähnenden Ausführungsformen, umfasst Luftzufuhrmittel, welche auch justierbar ausgebildet sein können. Diese Luftzufuhrmittel, beispielsweise realisiert in Form von Luftzufuhrschlitzen, ermöglichen durch Zufuhr von Verbrennungsluft respektive Sauerstoff einen effektiven und optimierten Verbrennungsvorgang. Die Luftzufuhrmittel sind dabei bevorzugt an der Grundplatte und/oder nahe der Öffnung in der Grundplatte, insbesondere am Auffangbehältnis und/oder dem Sockel, angeordnet.

Ausführungsbeispiele der vorliegenden Erfindung werden nachstehend anhand von Figuren noch näher erläutert. Es zeigen
Fig. 1 eine vereinfachte perspektivische Darstellung einer Verbrennungsvorrichtung;
Fig. 2 eine detailliertere perspektivische Darstellung einer Verbrennungsvorrichtung gemäss einer Ausführungsform;
Fig. 3 eine detailliertere perspektivische Darstellung einer Verbrennungsvorrichtung gemäss einer weiteren Ausführungsform;
Fig. 4 eine detailliertere perspektivische Darstellung einer Verbrennungsvorrichtung gemäss einer weiteren Ausführungsform;
Fig. 5 eine detailliertere perspektivische Darstellung einer Verbrennungsvorrichtung gemäss einer weiteren Ausführungsform;
Fig. 6 eine Teilansicht einer Verbrennungsvorrichtung gemäss einer Ausführungsform;
Fig.7 eine Detailansicht einer Verbrennungsvorrichtung gemäss einer Ausführungsform;
Fig. 8 eine detailliertere perspektivische Darstellung einer Verbrennungsvorrichtung gemäss einer weiteren Ausführungsform und
Fig. 9 eine detailliertere perspektivische Darstellung einer Verbrennungsvorrichtung gemäss einer weiteren Ausführungsform.

Die folgenden Ausführungsformen sind Beispiele und dienen nicht dazu, die Erfindung in irgendeiner Form einzuschränken.

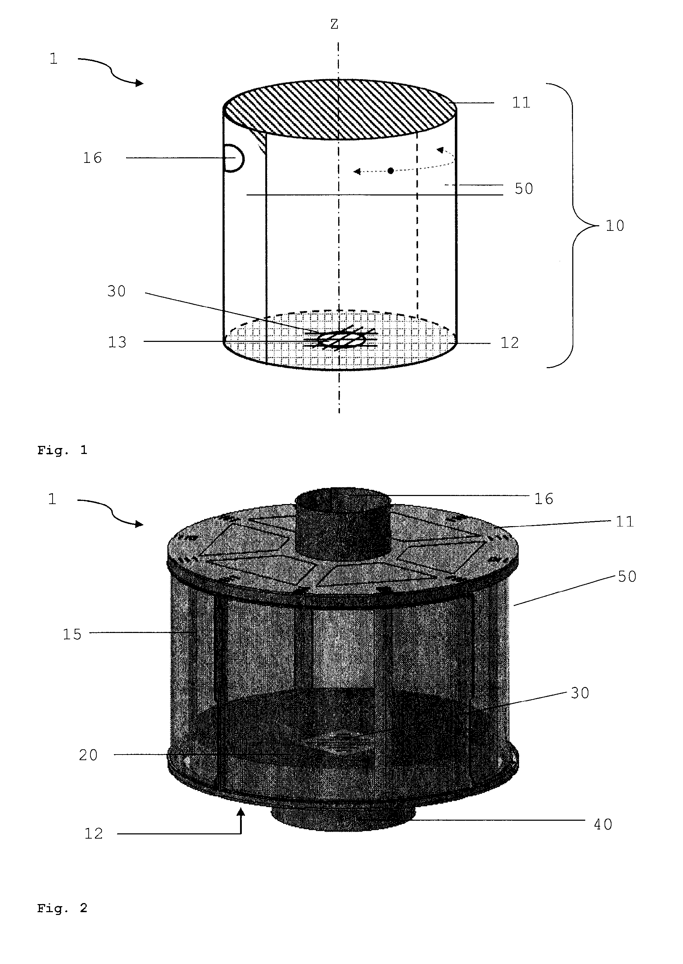

In Figur 1 ist schematisch eine Verbrennungsvorrichtung 1 gezeigt, welche einen freistehenden Zylinder 10 umfasst. Der Zylinder 10 wiederum umfasst eine Abdeckplatte 11, eine in diesem Fall zweiteilige Zylindermantelwand 50, eine im Zylinder quer zur Achse des Zylinders Z liegende Grundplatte 12 und eine Öffnung 16 zum Abführen von Rauchgasen. Die Grundplatte 12 weist eine Öffnung 13 auf, die durch einen Rost 30 abgedeckt ist. Die beiden Teile der Zylindermantelwand 50 sind, wie durch den gestrichelt eingezeichneten Doppelpfeil angedeutet, relativ zueinander azimutal verschieblich. In diesem Beispiel wird durch das Vorhandensein von nur einem Pfeil impliziert, dass der Teil der Zylindermantelwand 50, auf welcher der Pfeil aufgezeichnet ist, verschieblich ist, wohingegen der Teil der Zylindermantelwand 50 ohne Pfeil unbeweglich ist.

Jedoch ist es nicht zwingend, dass ein Teil der Zylindermantelwand unbeweglich und ein anderer Teil verschieblich ist. Es könnten beispielsweise auch alle Teile, bezogen auf das obige Beispiel also beide Teile der Zylindermantelwand, beweglich sein.

In Figur 2 abgebildet ist eine Ausführungsform der Verbrennungsvorrichtung 1, welche über ein Auffangbehältnis 40 für Asche verfügt. Besagtes Auffangbehältnis 40 ist unterhalb der durch einen Rost 30 abgedeckten Öffnung 13 der Grundplatte 12 angeordnet und kann auch als Standfuss dienen. Der Rost 30 verfügt über einen Griff, der das unkomplizierte Entfernen des Rostes 30 beispielswiese zu Reinigungszwecken, ermöglicht. Die Öffnung 16 zum Abführen von Rauchgasen befindet sich im Gegensatz zu Figur 1 nicht in der Zylindermantelwand 50, sondern in der Abdeckplatte 11. Vier Streben 15 stützen die Abdeckplatte 11 auf der Grundplatte 12 ab. Die Grundplatte 12 ist überdeckt von einer Einlegeplatte 20 aus feuerfestem Material.

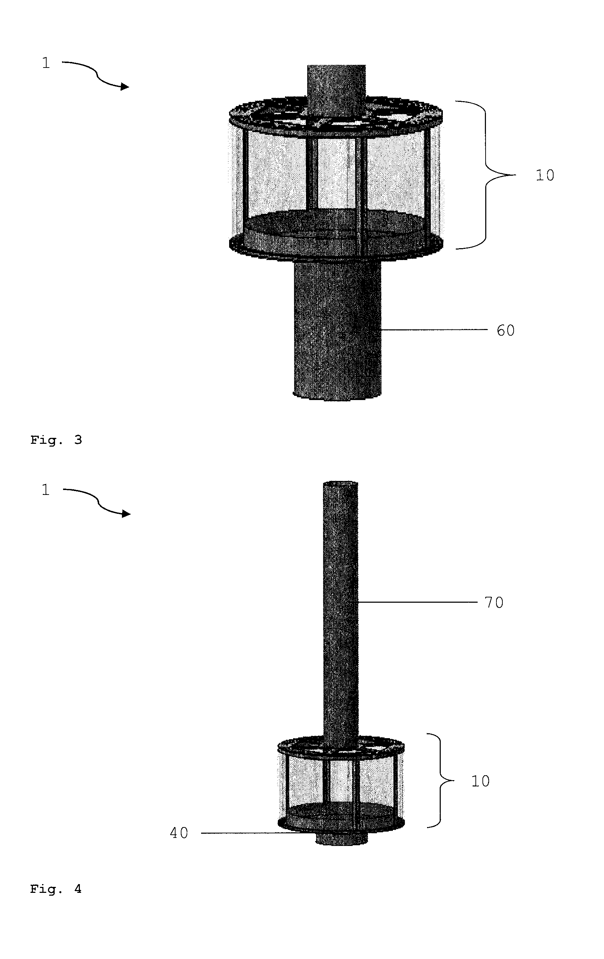

Figur 3 zeigt eine Verbrennungsvorrichtung 1 bei welcher der Zylinder 10 koaxial abgestützt ist auf einem Sockel 60. Die Achse des Zylinders Z (siehe Figur 1) stimmt also mit der Rotationsachse des Sockels überein. Der Sockel 60 ermöglicht das Aufstellen der Verbrennungsvorrichtung in beliebiger, dem individuellen Kundenwunsch entsprechender, Höhe.

Das Auffangbehältnis 40 für Asche kann im Sockel vorhanden sein und beispielsweise über eine Klappe, Schublade oder dergleichen zugänglich sein. In diesem Fall dient nicht das Auffangbehältnis 40 selbst als Standfuss des Zylinders 10, sondern der Sockel 60. Der Sockel muss nach Installation nicht zwangsläufig eine feste Höhe besitzen, sondern kann auch höhenverstellbar und arretierbar ausgebildet sein.

In Figur 4 dargestellt ist eine Verbrennungsvorrichtung 1, welche ein Rohr 70 zum Abführen von Rauchgasen aufweist. In diesem Fall ist die Öffnung 16 zum Abführen der Rauchgase, wie in Figur 3, durch eine Öffnung in der Abdeckplatte 11 realisiert, jedoch ist an dieser Öffnung 16 ein Rohr 70 angebracht. Dies hat den Vorteil, dass die Rauchgase kanalisiert werden und erst in einer grösseren Höhe aus der Verbrennungsvorrichtung 1 austreten, welche bevorzugt höher ist als die Körpergrösse des Anwenders. Somit wird vermieden, dass dem Anwender Rauchgase ins Gesicht geblasen werden. Je höher das Rohr ist, desto weniger Geruchsbelästigung entsteht.

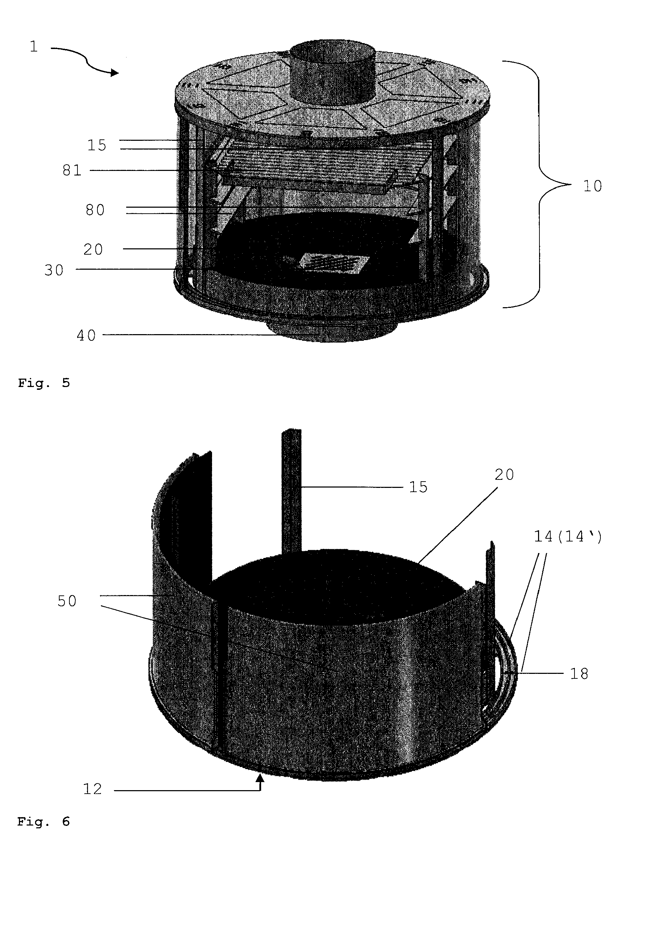

Figur 5 zeigt eine Verbrennungsvorrichtung 1 mit Innenrost 81. Der Innenrost 81 ist abgestützt auf Auflagen 80, die innerhalb des Zylinders 10 angeordnet sind. Die Auflagen 80 sind realisiert in Form von Sprossen zweier Leitern, die an einer peripheren Erhöhung der Grundplatte angebracht sind. Die beiden Leitern sind gegenüberliegend angebracht und ihre Sprossen sind aufeinander ausgerichtet.

Alternativ können die Auflagen 80 auch direkt an den Streben 15 angebracht werden. Anstelle von Auflagen 80 in Form von Sprossen können beispielsweise auch Haken zum einhängen des Innenrostes 81 vorhanden sein, oder der Innenrost 81 kann beispielsweise über eine oder mehrere Metallketten an einem oder mehreren an der Abdeckplatte angebrachten Haken befestigt werden, sodass er freischwingend ist.

In Figur 6 abgebildet ist ein Teil einer Verbrennungsvorrichtung 1 und zwar eine Ausführungsform der Grundplatte 12. Die Grundplatte 12 besitzt einerseits einen Positionierungsring 17, welcher die Einlegeplatte 20 umschliesst, andererseits Führungsmittel 14 für mindestens einen Teil der Zylindermantelwand 50. In diesem Beispiel sind die Führungsmittel 14 Führungsrippen 14', in deren Zwischenräumen Teile der Zylindermantelwand 50 gleitend bewegt werden können. Darüber hinaus sind an der Grundplatte 12, in dieser Ausführungsform am Positionierungsring 17, Streben 15 zum Abstützen der Abdeckplatte 11 angebracht. Die Streben 15 können jedoch auch oder ausschliesslich zur Befestigung von nicht beweglichen Teilen der Zylindermantelwand 50 dienen. An den beweglichen Teilen der Zylindermantelwand 50 wiederum sind Griffelemente vorgesehen, die das Verschieben erleichtern.

Als Griffelement können beispielsweise ein einfacher Griff, ein Stift, ein Knauf etc. dienen. Es kann auch ein Schliessmechanismus angebracht sein, optional mit Kindersicherung. Der Schliessmechanismus kann beispielsweise eine Haken-Ösen-kombination oder dergleichen sein. Bei den Führungsmitteln für mindestens einen Teil der Zylindermantelwand kann es sich anstelle von durchgängigen peripheren Erhöhungen beispielsweise auch um sektorförmige Erhöhungen, Zapfen, Noppen oder ein Schienensystem mit Führungsschiene und Laufschuh handeln. Die Führungsmittel müssen auch nicht zwangsläufig an der Grundplatte 12 angeordnet sein, sondern können anstatt dessen an der Abdeckplatte 11 oder an der Abdeckplatte 11 und an der Grundplatte 12 vorhanden sein. Ist eine Einlegeplatte 20 vorhanden, so muss diese auch nicht zwangsläufig von einem einstückigen Positionierungsring 17 umschlossen sein. Die Positionierung und Stabilisierung der Einlegeplatte 20 kann beispielsweise auch mittels eines sektorförmig unterbrochenen Positionierungsrings 17 erfolgen, durch Noppen respektive Zapfen an der Grundplatte 12 und Nuten an der Einlegeplatte 20 oder vice versa, oder einfach ohne zusätzliche Mittel durch Schwerkraft. Ausnehmungen an der Grundplatte 12, die sich zwischen dem Bereich, welcher von der Einlegeplatte überdeckt ist und dem Bereich, in dem die Führungsmittel 14 angeordnet sind, befinden, dienen als Luftzufuhrmittel 18.

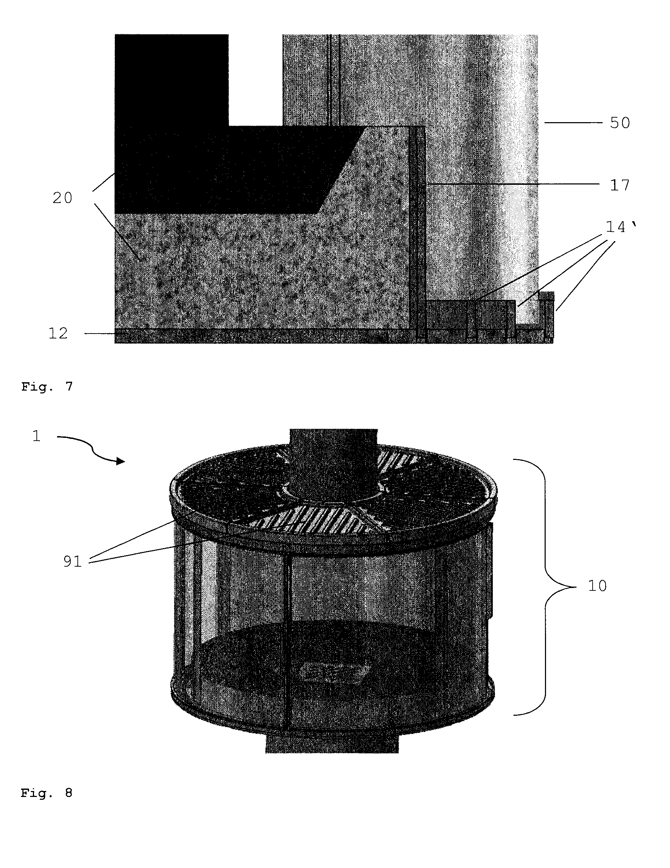

Figur 7 zeigt eine Detailansicht möglicher Führungsmittel 14 einer Verbrennungsvorrichtung 1. Abgebildet ist ein Ausschnitt einer Grundplatte 12, welche eine erste periphere Erhöhung die Einlegeplatte 20 umschliessend aufweist. In der dargestellten Ausführungsform liegt auf der umschlossenen einen Einlegeplatte 20 eine zweite Einlegeplatte 20 auf. Bei dem abgebildeten Teil der Zylindermantelwand 50 handelt es sich um einen beweglichen Teil, dessen Bewegung geführt ist mithilfe von Führungsmitteln 14. Bei den Führungsmitteln handelt es sich um Führungsrippen 14', zwischen denen eine Führungsnut gebildet wird.

Die Führungsrippen 14', aber auch die Führungsmittel 14 im Allgemeinen, können Teil der Grundplatte 12 sein, sprich einstückig sein und beispielsweise aus der Grundplatte 12 gedreht, gefräst, gecuttet etc. sein, oder aber angeschweisst, aufgeschraubt, geklebt, gelötet, gesteckt etc. sein.

In Figur 8 abgebildet ist eine Verbrennungsvorrichtung 1 auf deren Abdeckplatte 11 mehrere Gussplatten 91 angeordnet sind. Die Gussplatten 91 können beispielsweise zum Grillen von Fleisch, Fisch oder Gemüse verwendet werden.

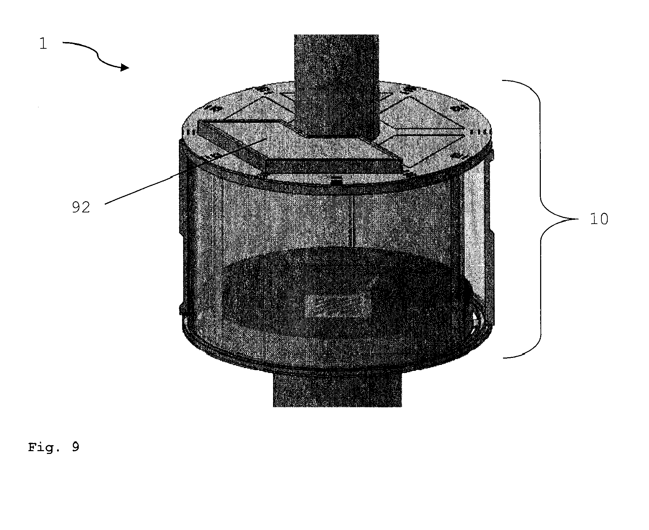

In Figur 9 gezeigt ist eine Verbrennungsvorrichtung 1 auf deren Abdeckplatte 11 eine Steinplatte 92 angeordnet ist. Die Steinplatte 92 kann beispielsweise zum Braten verschiedenster Fleischarten verwendet werden.

Selbstverständlich kann die Abdeckplatte 11 selbst, mit oder ohne zusätzliche Auflage wie Guss- oder Steinplatten zum Warmhalten von Speisen, aber auch zum Zubereiten von Käsefondue, Eintöpfen, Wokgerichten, Fondue Bourguignonne oder Chinoise etc. verwendet werden. Die mindestens eine Gussplatte 91 und/oder Steinplatte 92 kann mit der Abdeckplatte 11 fest verbunden sein, auf ihr aufliegen, oder formschlüssig mit ihr verbunden sein.

| **Zeichen** | **Bedeutung** |
|---|---|
| 1 | Verbrennungsvorrichtung |
| 10 | Zylinder |
| 11 | Abdeckplatte |
| 12 | Grundplatte |
| 13 | Öffnung |
| 14 | Führungsmittel |
| 14' | Führungsrippen |
| 15 | Strebe |
| 16 | Öffnung zum Abführen von Rauchgasen |
| 17 | Positionierungsring |
| 18 | Luftzufuhrmittel |
| 20 | Einlegeplatte |
| 30 | Rost |
| 40 | Auffangbehältnis |
| 50 | Zylindermantelwand |
| 60 | Sockel |
| 70 | Rohr |
| 80 | Auflage |
| 81 | Innenrost |
| 91 | Gussplatte |
| 92 | Steinplatte |
| Z | Achse des Zylinders |

## Patentansprüche

1. Verbrennungsvorrichtung (1) umfassend:
- einen Feuerraum in einem freistehenden Zylinder (10), wobei der Zylinder umfasst:
eine Abdeckplatte (11),
eine mindestens zweiteilige Zylindermantelwand (50) aus Glas und/oder Keramik und/oder Blech, wobei die Teile relativ zueinander azimutal verschieblich sind,
eine im Zylinder (10) querliegende Grundplatte (12) mit mindestens einer Öffnung (13), wobei die Öffnung (13) mittels eines Rostes (30) abgedeckt ist und
eine weitere Öffnung (16) zum Abführen von Rauchgasen.

2. Verbrennungsvorrichtung (1) nach Anspruch 1, wobei mindestens einer der Teile der Zylindermantelwand (50) transparent ist, vorzugswiese aus Glas und/oder Keramik.

3. Verbrennungsvorrichtung (1) nach einem der Ansprüche 1 oder 2, wobei unterhalb der Öffnung (13) der Grundplatte (12) ein Auffangbehältnis (40) für Asche angeordnet ist.

4. Verbrennungsvorrichtung (1) nach einem der Ansprüche 1 bis 3, wobei der Zylinder (10) auf einem Sockel (60) abgestützt ist, vorzugsweise koaxial zu dem Zylinder.

5. Verbrennungsvorrichtung (1) nach Anspruch 4, wobei im Sockel (60) ein Auffangbehältnis (40) für Asche vorhanden ist.

6. Verbrennungsvorrichtung (1) nach einem der Ansprüche 1 bis 5, wobei die weitere Öffnung (16) eine Öffnung in der Abdeckplatte (11) ist, an welcher Öffnung ein Rohr (70) angebracht ist.

7. Verbrennungsvorrichtung (1) nach einem der Ansprüche 1 bis 6, wobei die Grundplatte (12) mindestens teilweise von einer Einlegeplatte (20) aus feuerfestem Material überdeckt ist, wobei die Einlegeplatte (20) eine Öffnung, welche mindestens teilweise über der Öffnung (13) der Grundplatte liegt, aufweist.

8. Verbrennungsvorrichtung (1) nach Anspruch 7, wobei die Einlegeplatte (20) mehrteilig ist.

9. Verbrennungsvorrichtung (1) nach einem der Ansprüche 7 oder 8, wobei die Einlegeplatte (20) aus mindestens einem der folgenden Materialien besteht:
- Keramik
- Glas
- Glaskeramik
- Siliciumoxid
- Aluminiumoxid
- Magnesiumoxid
- Calciumoxid
- Zirconiumoxid
- Chromoxid
- Siliciumcarbid
- Kohlenstoff
- Molybdän
- Wolfram
- Edelmetall
- bevorzugt aus Schamotte

10. Verbrennungsvorrichtung (1) nach einem der Ansprüche 1 bis 9, wobei innerhalb des Zylinders (10) mindestens ein Innenrost (81) angeordnet ist.

11. Verbrennungsvorrichtung (1) nach einem der Ansprüche 1 bis 10, wobei innerhalb des Zylinders (10) Auflagen (80) für mindestens einen Innenrost (81) angeordnet sind.

12. Verbrennungsvorrichtung (1) nach einem der Ansprüche 1 bis 11, wobei es mindestens eine Gussplatte (91) und/oder mindestens eine Steinplatte (92) auf der Abdeckplatte (11) des Zylinders (10) hat.

13. Verbrennungsvorrichtung (1) nach einem der Ansprüche 1 bis 12, wobei an der Grundplatte (12) und/oder der Abdeckplatte (11), entlang der Zylinderperipherie durchgehend umlaufend und/oder in Sektorabschnitten, Führungsmittel (14) für mindestens einen Teil der Zylindermantelwand (50) angeordnet sind.

14. Verbrennungsvorrichtung (1) nach einem der Ansprüche 1 bis 13, wobei die Zylindermantelwand (50) aus vier Teilen besteht, wobei mindestens zwei der Teile im Wesentlichen aus Glas sind.

15. Verbrennungsvorrichtung (1) nach einem der Ansprüche 1 bis 14, wobei die Zylindermantelwand (50) aus vier azimutal gleich ausgedehnten Teilen besteht, wovon zwei Teile unbeweglich und zwei Teile verschieblich sind, bevorzugt, betrachtet von der Zylinderaussenseite, hinter die unbeweglichen Teile.

16. Verbrennungsvorrichtung (1) nach einem der Ansprüche 1 bis 15, wobei eine, vorzugsweise mehrere, Streben (15) die Abdeckplatte (11) auf der Grundplatte (12) abstützen, vorzugsweise innerhalb des Zylinders (10).
